# EUROPEAN PATENT APPLICATION

(11) **EP 4 660 915 A1**
(43) Date of publication of application: **10.12.2025**
(21) Application number: 24180172.9
(22) Date of filing: 05.06.2024
(51) Int. Cl.: G06Q 20/10, G06Q 20/18, G07F 19/00, H04L 9/08, H04L 9/32

(54) **METHODS AND DEVICES FOR SELF-SERVICE TERMINALS**

(71) Applicant: Diebold Nixdorf Systems GmbH, 33106 Paderborn (DE)
(72) Inventor: VON DER LIPPE, Carsten, 33106 Paderborn (DE); WESTERWELLE, Max, 33106 Paderborn (DE); PRIESTERJAHN, Steffen, 33106 Paderborn (DE); WOIBEL, Peter, 33106 Paderborn (DE)
(74) Representative: Viering, Jentschura & Partner mbB Patent- und Rechtsanwälte

(57) **Abstract**

A method including: generating, by a self-service terminal, SST, a cryptographic key; sending the cryptographic key to a remote device; generating, by the SST, a cryptographic challenge; outputting, via a user interface of the SST, the cryptographic challenge; receiving, via the user interface of the SST, a response to the cryptographic challenge; and verifying the response to authorize a user to access a resource of the SST.

## Description

### Technical Field

Various aspects relate generally to methods and devices for self-service terminals (SSTs).

### Background

For SSTs like automated teller machines (ATMs), kiosks, vending machines, and other automated systems, it is crucial to implement robust access control mechanisms to ensure only authorized personnel can access sensitive resources or functions of the terminals. A common approach may include requiring technicians to authenticate with credentials like a username and password. However, simply authenticating the user may often be considered as insufficient, as different technicians may require varying levels of access privileges. More advanced authorization schemes may be needed to determine which specific resources or operations each technician can access based on their role, clearance level, or other predefined criteria. Some resources may be restricted to a subset of highly specialized technicians, while others are more widely accessible. This granular control over resource access rights is essential for maintaining security, operational integrity, and preventing misuse of critical SST components.

SSTs may face challenges in terms of communication due to their diverse deployment environments and the need to support legacy technologies. Many SSTs may still rely on older communication protocols or technologies, which can limit their ability to establish reliable connections or exchange data securely. Additionally, SSTs may not always have continuous online connectivity, either due to intermittent network coverage or cost considerations, making it difficult to implement real-time access control mechanisms that rely on constant communication with central servers or databases. Furthermore, SSTs can be deployed in remote locations with limited or no network coverage, such as rural areas or underground facilities, posing significant challenges for radio-based communication technologies. In such scenarios, alternative communication methods or offline access control solutions may be required to ensure technicians can still perform necessary maintenance or repair tasks while adhering to strict security protocols.

### Brief Description of the Drawings

In the drawings, like reference characters generally refer to the same parts throughout the different views. The drawings are not necessarily to scale, emphasis instead generally being placed upon illustrating the principles of the disclosure. In the following description, various aspects of the disclosure are described with reference to the following drawings, in which:
- FIG. 1: shows schematically an illustrative example of an SST;
- FIG. 2: shows an illustrative example of a system including an SST;
- FIG. 3: shows an example of stored information for multiple cryptographic keys for an instance
- FIG. 4: shows an illustrative example including multiple SSTs in accordance with various aspects provided herein;
- FIG. 5: shows an illustrative example of a procedure associated with generating and sending cryptographic keys to the remote server;
- FIG. 6: shows an example of a method.

### Description

The following detailed description refers to the accompanying drawings that show, by way of illustration, exemplary details, and aspects in which aspects of the present disclosure may be practiced. Aspects described herein are not necessarily mutually exclusive, as some aspects may be combined with other aspects to form further aspects. Various aspects may have been described in accordance with aspects associated with methods and various aspects may have been described in accordance with aspects associated with devices, but this should not be taken as limiting as the aspects described in accordance with methods apply to devices, and vice versa. Throughout the drawings, it should be noted that like reference numbers may be used structured similarly to depict the same or similar elements, features, and structures.

Many SSTs, especially older deployments, may rely on outdated communication protocols and technologies that lack modern security features like encryption. The lack of modern security features may make them vulnerable to breaches and unauthorized access attempts for resources of the SSTs. The limited bandwidth and the features of the supported communication protocols and technologies may also hinder implementing real-time access control that may require frequent central server communication.

In some examples, SSTs may be located in remote areas with patchy or unreliable network connectivity, which may disrupt access control systems that depend on continuous communication with central authentication/authorization servers. Technicians may face delays accessing necessary functions, leading to extended downtimes. Furthermore, certain SST locations may have poor network coverage for supported networks, like rural areas or underground facilities. Without reliable connectivity, it may become extremely difficult for the SST to implement secure remote access control or monitoring. In certain cases, different technician roles may require varying levels of access privileges to SST resources. Implementing granular access controls to manage such diverse requirements across multiple deployments may be complex, especially with connectivity constraints.

SSTs may further handle sensitive user data or critical operations, so ensuring their security, integrity and compliance with standards like PCI DSS may be considered to be paramount when deploying access control mechanisms. Relating these aspects specifically to automated teller machines (ATMs) as an example of SSTs, Legacy ATM models may use older, insecure communication protocols lacking encryption, creating vulnerabilities. Their limited bandwidth also restricts real-time remote access control implementation. ATMs located in rural towns or other remote areas frequently experience intermittent connectivity issues.

Furthermore, many ATMs are installed within closed banking networks without external internet access deliberately. Such an installation may limit the ability of the ATMs to communicate and verify credentials or authorization in real-time against online servers or databases. Typically, ATMs, or various other SSTs, may have only two main communication channels: i) a Software Updates Channel by which ATMs may receive software updates periodically, usually every few months; and ii) a Diagnostic Data Channel, by which the ATM may transfer diagnostic data and logs to a data center. The Diagnostic Data Channel may generally be configured as a one-way channel from the ATM to the data center, and not vice versa.

The lack of a continuous two-way communication channel may present further challenges for implementing robust access control mechanisms that rely on real-time authentication and authorization checks against central servers or databases. Without external network access, such SSTs cannot verify technician credentials against online authentication servers in real-time before granting access. There is also no ability to perform real-time checks with central authorization systems to determine the specific functions/resources each technician can access based on their role. The infrequent software update cycles may introduce credential changes (e.g., revocations, new roles), which cannot be propagated to such SSTs in a timely manner, creating security risks. Further, the lack of continuous two-way communication may hinders centralized monitoring and auditing of technician activities on such SSTs for security purposes. These limitations may make challenging to implement secure, granular, and up-to-date resource access control for SST technicians while meeting designated, and potentially strict, security and compliance requirements.

Commonly used authentication and access control mechanisms on SSTs may have limitations. Provisioning SSTs with cryptographic material like certificates or keys for authentication purposes in traditional methods may be constrained by the impracticality, as well as hardware restrictions on many modern hardened SST models that may prevent the use of external devices like USB dongles. Offline authentication mechanisms that pre-provision SSTs with authentication data or one-time codes may address network connectivity issues but struggle to maintain up-to-date authentication data across an entire SST network.

In accordance with various aspects provided herein, methods and devices may employ use of cryptographic keys to provide a secure and convenient access control for resources of the SSTs by addressing one or more of the issues described above or within this description. In various examples, cryptographic keys may be generated at the SST and may be sent to a server (i.e. a remote device). Illustratively, the server may receive generated cryptographic keys by multiple SSTs and send respective cryptographic keys to respective technicians with respect to tasks (e.g. maintenance tasks) provisioned for each technician. In some examples, to secure conveyed cryptographic keys through designated communication lines, the cryptographic keys may be encrypted and shared in encrypted format between designated devices.

In accordance with various aspects described herein, the cryptographic key generated at the SST side may be the private key of an asymmetric key pair, and the public key of the asymmetric key may be kept at the SST side. Accordingly, a device (e.g. a mobile device carried by the technician) storing the private key may execute a cryptographic operation using the private key, for example to decrypt information provided by the SST. Through a challenge-response operation performed between the SST and the mobile device or the user carrying the mobile device, an access control for resources of the SST may be provided.

In accordance with various aspects described herein, the SST may use the communication interface and/or the communication channel that is traditionally used to convey diagnostic data and/or telemetry data of the SST to send the cryptographic key to the remote device. As described above, such communication interface and/or communication channel may be configured for uni-directional communication, i.e. only from the SST to the remote device. In some examples, the cryptographic key and the diagnostic and/or telemetry data Correspondingly, the server may extract the cryptographic key and the diagnostic and/or telemetry data from the data received from the SST.

Correspondingly, aspects have been described herein through examples of a system including one or more SSTs and a remote device such as a diagnostic and/or telemetry data server. In some examples, the system may further include one or more mobile devices that may be usable by users seeking access of designated resources of the one or more SSTs. In some constellations, SSTs are exemplified with ATMs. It is however to be noted that aspects described for ATMs may be also suitable for other types of SSTs. The skilled person would recognize aspects that apply to any type of SSTs and aspects that are directed to characterizations associated with ATMs.

The term "operation area" may refer to a physical space or zone where a customer (i.e. a user) may interact with the one or more SSTs, for example, to complete a transaction. An operation area may include a designated vicinity around the one or more SSTs, where a user may interact with the one or more SSTs, and optionally with designated devices of the one or more SSTs to perform actions related to the transaction.

The present disclosure may include various methods, functions, processes, etc. They may be performed by hardware components (e.g. a processor and/or a control device as described herein) or may be provided in computer-readable instructions which, if executed by a general purpose or special purpose processor or other logic circuits, cause the respective processor or logic circuits to perform them.

The term "processor" in this disclosure may refer to any entity capable of processing data and/or signals. Illustratively, the processor may execute designated functions that process data and/or signals in a designated manner. A processor can encompass various forms, such as analog circuits, digital circuits, analog and digital circuits, logic circuits. A processor may include one or more of: microprocessors, Central Processing Units (CPUs), Graphics Processing Units (GPUs), Digital Signal Processors (DSPs), Field Programmable Gate Arrays (FPGAs), Application Specific Integrated Circuits (ASICs), as examples, or any combination thereof. Any other kind of implementation of the respective functions, some of which may have been described in this disclosure in further detail, may also be understood as a processor, controller, or logic circuit. It is further to be noted that a plurality of the processors, controllers, or logic circuits described herein may be referred to as a single entity with equivalent functionality or the like, and conversely that any single processor, controller, or logic circuit detailed herein may be realized as two (or more) separate entities with equivalent functionality or the like.

The term "control device" (also referred as to controller) may be understood as any kind of a logic implementing entity, which may be special purpose circuitry or a processor executing software stored in a memory, firmware, or any combination thereof. Thus, a "control device" may refer to a processor and/or may include a hard-wired logic circuit or a programmable logic circuit such as a programmable processing entity, a microprocessor (e.g. a Complex Instruction Set Computer (CISC) processor, or a Reduced Instruction Set Computer (RISC) processor). A "control device" may, additionally or alternatively, include one or more processors executing software, e.g. any kind of computer program.

As used herein, "memory" is understood as a non-transitory computer-readable medium in which data or information can be stored for retrieval. References to "memory" included herein may thus be understood as referring to volatile or non-volatile memory, including random access memory ("RAM"), read-only memory ("ROM"), flash memory, solid-state storage, magnetic tape, hard disk drive, optical drive, etc., or any combination thereof. Furthermore, registers, shift registers, processor registers, data buffers, etc., are also embraced herein by the term memory. A single component referred to as "memory" or "a memory" may be composed of more than one different type of memory, and thus may refer to a collective component including one or more types of memory. Any single memory component may be separated into multiple collectively equivalent memory components, and vice versa.. The term "software" refers to any type of executable instruction, including firmware.

Unless explicitly specified, the term "transmit" encompasses both direct (point-to-point) and indirect transmission (via one or more intermediary points). Similarly, the term "receive" encompasses both direct and indirect reception. Furthermore, the terms "transmit," "receive," "communicate," and other similar terms encompass both physical transmission (e.g., the transmission of signals, e.g., electrical currents) and logical transmission (e.g., the transmission of digital data over a logical software-level connection). For example, a processor or controller may transmit or receive data over a software-level connection with another processor or controller in the form of signals, where the physical transmission and reception are handled by signal-layer components such as transceivers, and the logical transmission and reception over the software-level connection is performed by the processors or controllers. The term "communicate" encompasses one or both transmitting and receiving, i.e., unidirectional or bidirectional communication in one or both of the incoming and outgoing directions. The term "calculate" encompasses both 'direct' calculations via a mathematical expression/formula/relationship and 'indirect' calculations via lookup or hash tables and other array indexing or searching operations. In various aspects, the communication may include the use of a designated communication protocol for the exchange of information.

The term "user interface" (herein also referred to as UI) may be understood as any type of component, hardware or software or a combination thereof, that is configured to interact with a user in a designated manner with the corresponding entity (e.g. SST). The user interface may encompass all elements, features, and/or mechanisms that enable a user to communicate, control, and/or operate the corresponding entity to accomplish designated tasks or access information. Illustratively, a user interface may facilitate the exchange of information (e.g. instructions, messages, etc.) between the interacting user and the corresponding entity, illustratively by providing a visual, a tactile, an audible interface, through which the user may input instructions, access information, and navigate functionalities. For example, the user interface may include hardware components (e.g. input and/or output devices, through which the user can provide inputs and receive outputs respectively) and software components (e.g. a graphical user interface, drivers, etc.), which may operate with an operating system of the corresponding entity.

The references made to the ATM may analogously apply to other types of SSTs. One or more of the functions, methods, and/or aspects performed by the ATM may be analogously performed by another type of SST. Examples of other type of SSTs may include: banking terminal, self-service vending machine (e.g., for snacks, alcohol, cigarettes, and/or jewelry), ordering kiosks, self-checkout terminal, self-service gas station, self-service scale, and/or a slot machine.

It should be appreciated that the various concepts and aspects described herein in relation to devices, systems, and components thereof may also be applicable to corresponding methods. Likewise, aspects described in the context of methods may also be applicable to devices, systems, and components. For example, any of the functionality described in relation to the self-service terminal (SST), remote server, or their constituent components may be implemented through a computer program product comprising instructions that, when executed, cause a processor to perform the corresponding functions or operations. Conversely, any method or process steps described herein may be implemented by configuring hardware components, such as processors, memories, communication interfaces, and other circuitry, to execute the respective operations. Thus, the various concepts and aspects disclosed herein may be realized through hardware, software, or a combination thereof, and may be embodied in numerous forms beyond the specific examples provided.

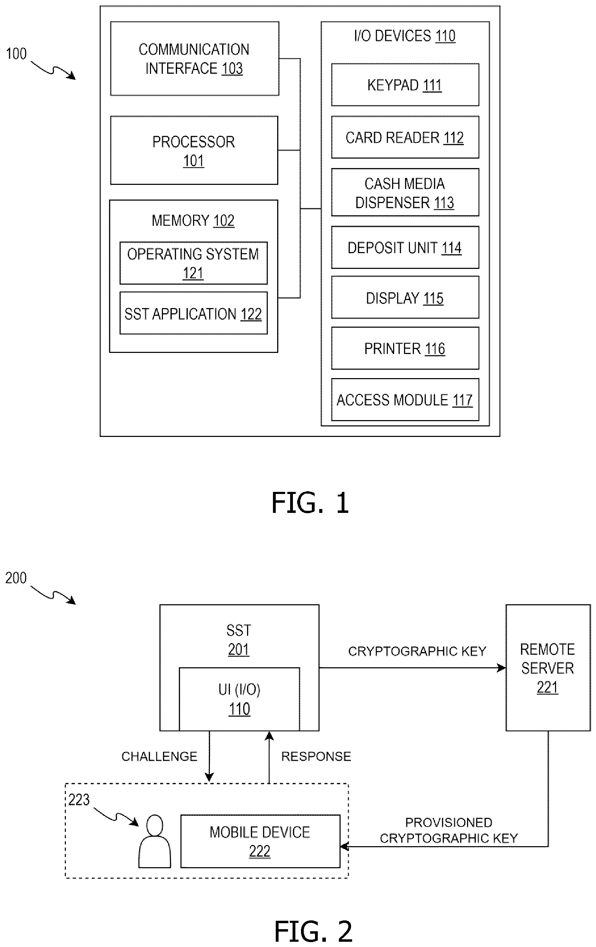

FIG. 1 shows schematically an illustrative example of an SST. The SST 100 may include various types of components, some of which are described herein, to interact with a user and perform its operations based on the type of the SST 100. Such operations may include, for example for an ATM, executing transactions, receiving money or checks, depositing money, etc. Such operations may include, for example for a self-checkout terminal, scanning items, executing sales transactions, etc.

The SST 100 may include a processor 101 to perform a variety of tasks in accordance with various aspects described herein. The processor 101 may include one or more processing means, the processor may include a central processing unit (CPU), a graphics processing unit (GPU), a hardware acceleration unit (e.g. one or more dedicated hardware accelerator circuits (e.g., ASICs, FPGAs, and other hardware)), a neuromorphic chip, and/or a controller. The processor 101 may be implemented in one processing unit, e.g. a system on chip (SOC), or a processor. In some examples, the processor 101 may include one or more cores as computation units, an arithmetic logic, a control unit, a storage unit, a plurality of registers, etc. The SST 100 may further include a memory 102. In some examples, the processor 101 and the memory 102 may form a control device, or alternatively a portion of the control device as described herein. The processor 101 and the memory 102 may be communicatively coupled to each other via an internal interface.

The SST 100 may further include a communication interface 103. The communication interface 103 may be configured to transmit communication signals via a communication medium according to one or more communication technologies to communicate with other device(s) that is/are external and remote to the SST. The communication interface 103 may further include a transmitter to transmit communication signals to remote devices (i.e. for uni-directional communication). The transmitter may transmit diagnostic and/or telemetry data from the SST 100 to the remote device (e.g. a server, a remote data center, a vendor facility). The transmitter may be configured to transmit the diagnostic and/or telemetry data over a dedicated diagnostic data channel including a one-way communication link from the SST 100 to the remote device for transferring diagnostic logs, error reports, transaction records, and other operational data of the SST 100 for monitoring and analysis purposes.

The diagnostic data channel may utilize various communication technologies and protocols depending on the deployment environment and connectivity options available at the location of the SST 100. In some implementations, the diagnostic data channel may be established over a wired connection, such as a dedicated telephone line, Ethernet, or other data communication link. Alternatively, in locations with limited wired connectivity, the diagnostic data channel may be implemented using wireless communication technologies, such as cellular networks (e.g., 3G, 4G, 5G), satellite links, or other suitable wireless protocols.

In some examples, the communication interface 103 may include a receiver. The receiver may be configured to receive software updates or other data from the vendor's data center or remote servers. The receiver may be used infrequently, as software updates for the SST 100 are generally performed periodically, such as every few months, rather than on a continuous or real-time basis.

In some examples, the communication interface 103 may communicate with a specialized network, such as a financial and/or bank network. For example, such a specialized network may include at least one of NYCE, PULSE, Cirrus, PLUS, AFFN, Interac, STAR, LINK, MegaLink, etc. In an example, the communication interface 103 may include a further transceiver to transmit and/or receive communication signals to/from the remote devices. The communication interface 103 may be configured to perform communication using wireless communication technologies (e.g. WLAN, cellular, Bluetooth, etc.) or wired communication technologies (e.g. USB, LAN, serial ports, etc.). The communication interface 103 may communicate with the other devices according to designated communication protocols. In some examples, the communication interface 103 may further be configured to communicate with local I/O devices or sensors (e.g. cameras) as described below. In some examples, the communication interface 103 may include one or more transceivers to perform bi-directional communication with local I/O devices or sensors.

The SST 100 may further include an operating system 121. For example, the memory 102 may store instructions of the operating system (OS) 121. The OS 121 may include instructions that may cause the processor 101 to manage and control hardware components of the SST (e.g. the processor 101, the memory 102, the communication interface 103, the I/O devices 110) and their operations, to facilitate communication between different hardware components, and to enable execution of applications (e.g. SST application 122), which these operations may be provided by the processor performing OS functions.

The SST 100 may further include an SST application (SSA) 122. For example, the memory 102 may further store instructions of the SSA 122. The SSA 122 may include instructions that may cause the processor 101 to perform various operations based on the type of the SST 100. The processor 101 may, via execution of these instructions, perform SSA functions, with which the processor 101 may process data and/or control other components of the SST 100 as designated by the SSA 122. Illustratively, for an ATM, SSA functions may cause the processor 101 to execute transactions, control I/O devices to receive money or checks, or deposit money, receive and/or provide data from I/O devices, generate graphical user interface (GUI) data, etc. For a self-checkout terminal, SSA functions may cause the processor 101 to control I/O devices to scan items, or to execute sales transactions, etc. It is to be recognized that such operations may be predefined operations defined by the SSA 122, and parameters of such predefined operations may be fixed or variable or determinable based on interactions of the user with the SST 100, illustratively through the user interface.

The SST 100 may further include one or more input and output (I/O) devices 110 that are communicatively coupled to the internal interface and/or the communication interface 103. It is depicted in the illustrative example that the SST 100 includes I/O devices 110, however, this should not be taken as limiting, and the I/O devices 110 may be communicatively coupled to the SST 100 via the communication interface 103 configured to communicate with the I/O devices 110 according to designated communication rules, syntax, etc. such as a designated communication protocol.

The I/O devices 110 may include various hardware and/or software components to provide input to the SST 100, in particular in the form of information (e.g. instructions, messages, raw data, streams, etc.) for the processor 101 to process received input information to associate received input information for designated instructions. The I/O devices 110 may include input devices that are designated based on the use case of the SST 100. In some examples, the I/O devices 110 may include one or more buttons (e.g. a keypad, a keyboard, buttons with designated functions, etc.). The provided input may include, for example, information representing an interaction of a user using the respective input device (e.g. information representing a pressed button of the keypad or keyboard). Exemplarily, a customer may use a keypad to enter an item number or a personal identification number (PIN) of a credit or a debit card, or a keyboard may be one of the I/O devices 110 delivering user interactions by receiving keystrokes, or a touchpad may be one of the I/O devices 110 delivering user interactions by receiving touch inputs, etc.

The I/O devices 110 may be configured to provide an output based on instructions executed by the processor 101. The I/O devices 110 may include output devices that are designated depending on the use case of the SST 100. The provided output may include, in particular, an output to present various types of information or indications for a user. For example, a display may be one of the I/O devices 110 configured to display visual information to the user in the form of images, text, pictures, videos, etc.

It should be noted that an I/O device may be both an input device and an output device for the SST 100 within this context. For example, one of the I/O devices 110 may include a display configured to provide a visual output to a user. Furthermore, the display may be a touch screen display that is configured to receive input from the user interacting with the display. The contact interaction from the user may be detected by a touch input device. The touch input device may be configured to detect the interaction of the user with the display via a contact of the user. The touch input device may be configured to detect contact and/or movement of the user (e.g. via a finger, via a stylus, etc.,) while touching the display. Alternatively, the touch input device may be configured to detect the interaction of the user via another defined surface. For example, the touch input may include a touchpad that is configured to receive input from the user. Accordingly, such a display may be both an example of an input device and an output device.

The I/O devices 110 may include a keypad 111 including multiple keys. In some examples, the keypad 111 may further include an encryption unit to form an encrypted pin pad (EPP). For example, a user interacting with the SST 100 may use the keys to enter a code, such as a personal identification number (PIN). The encryption unit may receive the code and encrypt the received code to provide a secure operation against a sniffing attempt for the entered code. Illustratively, the processor 101 may obtain the encrypted code, for example via the SSA functions.

The I/O devices 110 may include a card reader 112 configured to receive a card. The card reader 112 may be configured to perform read and/or write operations to a card received by the card reader 112 through electrical/magnetic interactions. For example, a received card may include a magnetic strip and/or an electronic chip, which the card reader 112 may read or write data. Illustratively, the processor 101 may, e.g. via the SSA functions, control the card reader 112 to read data. The card reader 112 may provide read data to the processor 101. Similarly, the processor 101 may, e.g. via the SSA functions, provide data (e.g. a changed PIN code) and the card reader 112 may write provided data to the received card. In some examples, the card reader 112 may read financial information stored in a credit card and/or a debit card received by the card reader 112. The card reader 112 may read financial information and the SST 100. The card reader 112 may be configured to perform read and/or write operations in any known methods, such as through magnetic reading (e.g. via magnetic strips of the card) and/or electrical reading (e.g. via chips of the card), and/or contactless reading (e.g. NFC). In some examples, a card slot of the card reader 112 may be in communication with a card box to hold invalid cards received by the card reader 112 or cards held due to a predefined event (e.g. entering PIN of the card incorrectly N times).

The I/O devices 110 may further include a cash media dispenser 113. The cash media dispenser 113 may be configured to dispense cash media, such as banknotes or coins, to users of the SST 100. For an automated teller machine (ATM) implementation of the SST 100, the cash media dispenser 113 may enable users to withdraw cash from their accounts. The cash media dispenser 113 may comprise one or more cash media canisters or cartridges that may hold the banknotes and/or coins to be dispensed. These canisters may be loaded and periodically replenished by authorized personnel, such as bank employees or cash-in-transit operators. The canisters may be removable for ease of loading/unloading cash media. The cash media dispenser 113 may further include a transport mechanism, such as belts, rollers, or air channels, to convey the banknotes or coins from the canisters to a dispensing slot or tray accessible to the user. Control electronics and sensors within the dispenser 113 may ensure precise picking, handling, and dispensing of the requested cash denominations and amounts. The cash media dispenser 113 may operate under the control of the processor 101 executing instructions from the SST application (SSA) 122. During a cash withdrawal transaction, the processor 101 may, via the SSA functions, determine the amount to be dispensed based on the user's request and available funds. The processor 101 may then send commands to the cash media dispenser 113 to retrieve the appropriate number and types of banknotes or coins from the canisters and dispense them to the user. The cash media dispenser 113 may incorporate various security features to prevent theft or tampering, such as cash canister locks, sensors to detect unauthorized access attempts, and integration with the SST's security systems. Additionally, the cash media dispenser 113 may include mechanisms for handling rejected or returned banknotes, as well as for detecting and diverting counterfeit or damaged currency.

The I/O devices 110 may further include a deposit unit 114 that is configured to enable users to deposit cash media or other items into the SST 100. For an ATM implementation, the deposit unit 114 may allow customers to deposit banknotes, coins, or checks into the SST 100 for credit to their accounts. The deposit unit 114 may include an input slot or tray where the user can insert the media to be deposited. The deposit unit 114 may include transport mechanisms like belts, rollers, or air channels to convey the deposited items into temporary storage canisters or cassettes within the deposit unit 114. The deposit unit 114 may be equipped with sensors and processing capabilities to validate, denominate, and count the deposited media accurately. The deposit unit 114 can detect counterfeit currency, double notes, or other irregularities and route them to designated rejection bins. Endorsed checks may be imaged by the deposit unit 114 before being stored or transported to back-office processing centers. The deposit unit 114 may operate under the control of the processor 101, via the SSA 122, to securely accept, process, and account for all deposited media in compliance with banking regulations and security protocols.

I/O devices 110 may further include one or more display devices 115 configured to provide visual information to the user. The display device 115 may include a touch screen display configured to receive touch inputs from the user. The processor 101 may generate data to be displayed on the display device 115. In accordance with various aspects provided herein, the display device 115 may be communicatively coupled to the processor 101 through the internal interface. The display device 115 may include any type of display configured to provide information and facilitate user interactions. Illustratively, the display device 115 may include a liquid crystal display (LCD), a light-emitting diode display (LED), an organic LED (OLED), or an electronic-ink display. It may be capable of rendering text, graphics, animations, and video content as required by the SST application 122. For an ATM implementation, the display device 115 may display user interface screens for conducting financial transactions, viewing account information, or receiving instructions. In a self-checkout terminal, it may display a product catalog, checkout process, or payment options.

The I/O devices 110 may include a printing unit 116 to provide printed outputs to users. The printing unit 116 may employ impact, thermal, inkjet, or laser printing technologies to print on paper substrates. For an ATM, the printing unit 116 may be used to generate transaction receipts, mini-statements, or other banking documentation. In a self-service kiosk or ticketing terminal, it may print tickets, passes, vouchers, or barcoded slips required by the user. The printing unit 116 may be integrated within the SST 100 or externally connected via the communication interface 103.

The SST 100 may further include an access module 117 that serves as a dedicated resource for authorized technicians to perform service, maintenance, or configuration tasks on the terminal. The access module 117 may include physical access ports, such as USB, serial, or proprietary interfaces, through which technicians may connect diagnostic tools, update firmware, or extract log data. The access module 117 may also provide a software interface, accessible through the communication interface 103, that allows technicians to access the SST's systems for troubleshooting, monitoring, or updating purposes. The access module 117 may implement robust authentication and authorization mechanisms to ensure only authorized personnel can access the sensitive service functions and resources of the SST 100.

In accordance with various aspects described herein, the SST 100 may include a user interface accessible to the user, which may be configured to receive user input, through designated interactions of the user, and which may be configured to provide visual, audible, or tactile output related to the transaction to the user. Illustratively, through interactions of the user with designated I/O devices (e.g. any one of the I/O devices 110), the processor 101 may receive, via OS functions information representing these transactions, and the OS functions may provide corresponding information representing these transactions to the SSA functions. The user interface of the SST 100 may include designated I/O devices, some of which have been described herein, in particular such as the keypad 111, the card reader 112, the display device 115, the access module, etc., and further, a GUI to be displayed by the display device 115, which the processor 101 may generate based on GUI information stored in the memory 102.

FIG. 2 shows an illustrative example of a system including an SST. Illustratively, the system 200 includes an SST 201 (e.g. the SST 100), a remote server 221 with which the SST 201 may communicate via a communication interface (e.g. the communication interface 103). Aspects with respect to the SST 201 may be described in accordance with the SST 100 described in accordance with FIG. 1 referring to the corresponding components. The remote server 221 may be configured to perform various operations and management functions. Illustratively, the remote server 221 may be deployed in a centralized data center or cloud environment and communicate with multiple distributed SST devices including the SST 201 over designated networks. The remote server may serve multiple purposes, such as hosting applications and services, storing and processing data, managing configurations, and monitoring system health and performance within the system. Some common functions of the remote server 221 may include application hosting, where the server runs the core business logic and user interfaces accessed by the SSTs including the SST 201. The remote server 221 may also act as a database server, storing transaction data, user information, and other critical records generated by the SST network. Additionally, the remote server 221 can facilitate centralized management, allowing administrators to remotely configure, update, and maintain the software and settings across all connected SSTs in a centralized architecture.

The remote server 221 may include a processor to perform a variety of tasks. The processor of the remote server 221 (which may be referred to as remote server processor) may include one or more processing means, such as a central processing unit (CPU), a graphics processing unit (GPU), hardware acceleration units (e.g., ASICs, FPGAs), a neuromorphic chip, and/or controllers. The remote server processor may be implemented as a single processing unit, like a system-on-chip (SoC), or as multiple processors. The remote server processor may include one or more cores, arithmetic logic units, control units, storage units, and registers. The remote server 221 may further include a memory (which may be referred to as a remote server memory. In some examples, the remote server processor and the remote server memory may form a control device or a portion thereof. The remote server processor and the remote server memory may be communicatively coupled via an internal interface. The remote server 221 may further include a communication interface (which may be referred to as a remote server communication interface). The remote server communication interface may be configured to transmit and receive communication signals via various communication media and technologies to communicate with external devices, such as the SST 201 and the mobile device 222.

In accordance with various aspects described herein, the system may further include a mobile device 222. The mobile device 222 may include a processor (which may be referred to as a mobile device processor) to perform a variety of tasks. The mobile device processor may include one or more processing means, such as a central processing unit (CPU), a graphics processing unit (GPU), hardware acceleration units (e.g., ASICs, FPGAs), a neural processing unit (NPU), and/or controllers. The mobile device processor may be implemented as a single processing unit, like a system-on-chip (SoC), or as multiple processors. The mobile device processor may include one or more cores, arithmetic logic units, control units, caches, and registers. The mobile device 222 may further include a memory (which may be referred to as a mobile device memory). In some examples, the mobile device processor and the mobile device memory may form a control device or a portion thereof. The mobile device processor and the mobile device memory may be communicatively coupled via an internal bus or interconnect. The mobile device 222 may further include a communication interface (which may be referred to as a mobile device communication interface). The mobile device communication interface may be configured to transmit and receive communication signals via various wireless communication media and technologies to communicate with external devices, such as the remote server 221 and other mobile devices or networks. The mobile device communication interface may include one or more wireless transceivers, such as a cellular modem (e.g., 4G LTE, 5G NR), a Wi-Fi transceiver (e.g., 802.11ac, 802.1lax), a Bluetooth transceiver, a near-field communication (NFC) transceiver, and/or other wireless communication modules. The mobile device communication interface may support various wireless communication protocols and standards, enabling the mobile device 222 to connect to cellular networks, Wi-Fi networks, personal area networks (PANs), and other wireless networks or devices. The mobile device communication interface may also include wired communication capabilities, such as a USB interface, an Ethernet port, or other wired interfaces, allowing the mobile device 222 to connect to wired networks or devices when necessary. The mobile device communication interface may facilitate secure communication with the remote server 221, enabling the exchange of data, commands, and updates between the mobile device 222 and the remote server 221.

The access module 117 of the SST 201 may serve as a resource for authorized technicians to perform service, maintenance, or configuration tasks on the terminal after proper authentication by accessing designated resources of the SST 201. The access module 117 may implement robust authentication mechanisms, such as requiring valid login credentials or an approved security token/key, to ensure only credentialed personnel can gain access. Upon successful authentication through the access module 117, the technician may be granted the ability to access sensitive service functions, resources, and components of the SST 201. For example, the authenticated technician can access a set of physical I/O devices 110 within the SST 201. Illustratively, such I/O devices may include the deposit unit 114, allowing the technician to service, repair, reload or retrieve deposited cash, checks, or other media from the storage canisters/cassettes. The technician can also access the cash media dispenser 113 to replenish cash canisters, clear jams, perform maintenance on the dispensing mechanisms, or retrieve any diverted/rejected banknotes. Furthermore, the authenticated technician may gain the ability to access and service other critical I/O components like the card reader 112 for troubleshooting issues, replacing reader heads, clearing jammed cards, or retrieving cards held due to events like repeated incorrect PINs. The technician can access the printer unit 116 to reload paper/toner, clear paper jams, or conduct printer maintenance. Other user interface components like the keypad 111 and display unit 115 can also be inspected, repaired or replaced by the authenticated technician as needed.

In accordance with various aspects provided herein, such I/O devices 110 may be, at least in part, accessible through one or more respective covers, lids, doors, ports, and the like (i.e. physical means to block access) on the housing of the SST 201, which may be configured to block access to such I/O devices 110 by default (e.g. in case of no authentication or authorization). and the processor 101 may, in response to an authentication of the user (e.g. an authenticated technician), control (e.g. authorize) the access module 117 to provide an access for such I/O devices 110. Illustratively, the access module 117 may disengage locks to make such I/O devices 110 accessible and/or control the one or more physical means to unblock the access.

In addition to the physical I/O devices, the access module 117 may allow the authenticated user to leverage software interfaces to access the SST's systems for tasks like troubleshooting, monitoring, updating firmware, or extracting log data. This software access may be provided through physical ports like USB, serial, or proprietary interfaces on the SST 201, or remotely over the communication interface 103 for authorized remote technicians. Strict access controls and auditing measures may be enforced by the access module 117 to maintain the integrity and security of the SST 201 and its critical components while enabling necessary maintenance activities. Different levels of access may be granted based on the technician's role, with granular permissions controlling which specific resources or functions they can access or modify. By requiring robust authentication, the SST 201 may ensure that only properly credentialed technicians can gain physical access to sensitive I/O devices handling customer data or cash, as well as logical access to the SST 201 for service and updates. This approach may mitigate risks of unauthorized access, data breaches, or unintended modifications to the configuration or operation of the SST 201.

There are various authentication mechanisms that the SST 201 may implement to authorize an authenticated user to access a resource of the SST 201. In accordance with various aspects described herein, a user of the SST 201 may be physically present at the SST 201, such that the user can interact with the user interface for authentication. The processor 101 may be configured to authorize an access of designated resources of the SST 201 via user's interaction, yet traditional methods, such as an authentication via username/password or biometrics may introduce various security risks for operation of the SST 201.

In accordance with various aspects provided herein, the SST 201 may provide an authorization to access designated one or more resources of the SST 201 via a cryptographic authentication operation involving the user interface. Illustratively, the processor 101 may be configured to generate a cryptographic key, which may be to be used in an authentication process. The ability of the processor 101 to generate the cryptographic key may enhance the security and uniqueness of the cryptographic keys used by the SST 201, while also enabling integration with key management systems like the CrypTA 5.0 Offline variant. In accordance with various aspects described herein, the cryptographic key may be a cryptographic key of a symmetric cryptographic key. In some examples, the cryptographic key referred to herein may include a cryptographic key of an asymmetric key pair, and in some particular examples, the private key of the asymmetric key pair.

For symmetric key generation, the processor 101 may be configured to use a secure random number generator (RNG) or a pseudorandom number generator (PRNG) to generate a random sequence of bits to be used as the symmetric key. This generated symmetric key can then be used with algorithms like Advanced Encryption Standard (AES) or triple data encryption standard (3DES). Accordingly, the generated symmetric key may correspond to the cryptographic key as referred to herein. For asymmetric key generation, the processor 101 may be equipped with a key generation module that implements algorithms for generating public-private key pairs. In some examples, the implemented algorithm may be compatible with the use of security tokens carriable by technicians, such as CrypTA (Cryptographic Technician Authentication) mechanism, for example the CrypT A 5.0 Offline variant. In the case of Rivest-Shamir-Adleman method (RSA), the processor 101 may execute an RSA key generation algorithm to randomly select two large prime numbers and mathematically combine them to generate the public and private key pair. For Elliptic Curve Cryptography (ECC)-based asymmetric keys, the processor 101 may implement an Elliptic Curve Digital Signature Algorithm (ECDSA) key generation process. Through implemented asymmetric key generation mechanism, the processor 101 may obtain a public key and a private key. In various examples, the cryptographic key may include the private key. In some examples, the processor 101 may generate a digital certificate including the cryptographic key.

In accordance with various aspects provided herein, the processor 101 may send the cryptographic key to the remote server 221. Accordingly, the processor 101 may configure a transmission to be performed by the communication interface 103 to send the cryptographic key to the remote server 221. The processor 101 may further store the generated keys within the memory 102.

For symmetric key generation, the processor 101 may store the generated symmetric key in the memory 102, which may illustratively be an encrypted portion of the memory 102 or a hardware security module. Furthermore, the processor 101 may establish a secure communication channel with the remote server 221 over the communication interface 103, using protocols like TLS/SSL to ensure confidentiality and integrity. The processor 101 may retrieve the generated symmetric key from the memory 102 and transmits it to the remote server 221 over the established secure channel. Optionally, the processor 101 may encrypt the symmetric key itself using a further encryption key, such as a public key of the remote server from a public-private key of the remote server, before transmission to provide an additional layer of protection.

For asymmetric key generation, the processor 101 may similarly store generated keys within the memory 102 or a hardware security module. In some examples, the processor 101 may store the public key within the memory 102. The processor 101 may establish a secure communication channel with the remote server 221 over the communication interface 103. The processor 101 may then transmit the generated private key to the remote server 221 over the secure channel. In alternative example, the processor 101 may store the private key within the memory 102 and send the public key to the remote server.

In some examples, the processor 101 may generate multiple cryptographic keys, as described above, in which each generated cryptographic key may be associated with corresponding one or more resources of the SST 201 to be accessed. Illustratively, a first cryptographic key may be associated with an access of first SST resources (e.g. access to the keypad and the card reader 112), a second cryptographic key may be associated with an access of second SST resources (e.g. access to the cash media dispenser 113 and deposit unit 114), a third cryptographic key may be associated with an access of third SST resources (e.g. software access). Correspondingly, the processor 101 may further store information representative of one or more resources to be accessed using the respective cryptographic key for each cryptographic key into the memory 102. Illustratively, the remote server 221 may provision a cryptographic key among these cryptographic keys at each instance to the technician, based on the access privilege of the technician and/or tasks assigned to the technician for the instance.

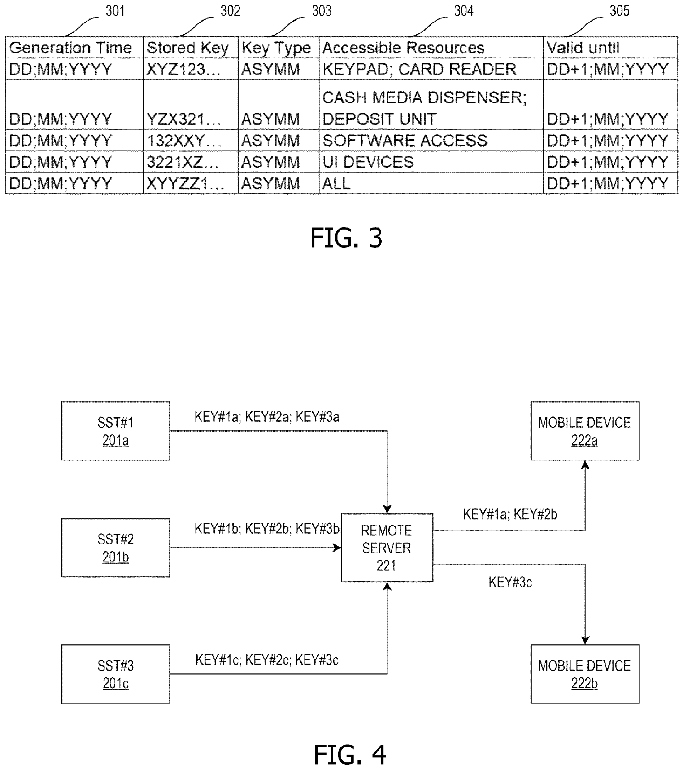

FIG. 3 shows an example of stored information for multiple cryptographic keys for an instance. The instance may be defined herein as the period of time (e.g. interval) in which the cryptographic keys are valid, which may be between, for example, the generation time 301 of that key and the expiry 305 of that key. Illustratively, the processor 101 may cause the memory 102 to store, for each cryptographic key, a generation (or transmission) time 301, a key 302 stored at the SST 201 side (e.g. symmetric key, the public key, or the private key), a type 303 of the key (e.g. whether it is asymmetric or symmetric key or corresponding key generation algorithm), accessible resources 304 associated for the cryptographic key, and expiry date 305. It is to be considered that the table is provided only as an example. It is further to be noted that the information indicating the accessible resources 304 may explicitly indicate the corresponding resources, or may indicate predefined modes including access to one or more resources (e.g. the mode "all" includes access to all resources available at the SST 201). In accordance with various aspects described herein, the processor 101 may further encode information representing the respective accessible resources for each generated cryptographic key for a transmission to the remote server 221, the SST 201 may transmit together with the cryptographic keys sent to the remote server 221.

Upon receiving the cryptographic key from the SST 201, the remote server 221 may securely store and manage these keys for purposes such as backup, recovery, centralized key management, or issuing digital certificates in the case of the public key. By following these steps, the SST 201 may generate cryptographic keys internally and transmit them to the remote server 221 over secure channels, leveraging techniques like encryption, digital signatures, and secure communication protocols to protect the confidentiality, integrity, and authenticity of the transmitted keys.

In accordance with some aspects, the processor 101 may cause the communication interface 103 to send the cryptographic keys using an uni-directional communication channel established between the SST 201 and the remote server 221. Illustratively, the processor 101 may be configured to send diagnostic and/or telemetry data over a dedicated diagnostic data channel to the remote server. In some examples, the processor 101 may be configured to send the diagnostic and/or telemetry data at a predetermined instance of time, or at predetermined intervals. The processor 101 may accordingly encode the cryptographic key for a previously scheduled transmission for sending of the diagnostic and/or telemetry data. For example, the processor 101 may determine a transmission to be performed for sending a scheduled diagnostic and/or telemetry data and encode the diagnostic and/or telemetry data together with the cryptographic key into a communication data (e.g. one or more data packets) and send the communication data with the transmission.

Illustratively, the diagnostic and/or telemetry data may include diagnostic logs, error reports, transaction records, and other operational data, which may include: Hardware status and performance metrics that may include at least one of CPU/GPU utilization, memory usage, disk space availability, temperature readings, fan speeds, power supply voltages; and/or Software/application logs that may include at least one of application error logs, system event logs, transaction logs; and/or Network connectivity data that may include at least one of network interface statistics (packet loss, latency, throughput), cellular/WiFi signal strength, connection uptime/downtime; and/or security-related data that may include at least one of failed login attempts, intrusion detection alerts encryption key status; and/or I/O device status that may include at least one of cash dispenser levels, printer ink/toner levels; card reader health, touch screen calibration data; and/or usage statistics that may include at least one of number of transactions processed, peak usage times user interaction data (button presses, touch events); and/or Environmental data (if applicable sensors are present) that may include at least one of ambient temperature/humidity, ambient light levels, motion detection events.

Correspondingly, the remote server 221 may receive the generated cryptographic key (or keys) from the SST 201. The remote server processor may store the received keys into the remote server memory. In the examples associated with sending the cryptographic key together with the diagnostic and/or telemetry data within communication data, the remote server processor may identify (e.g. extract) the cryptographic key, and if available information related to the cryptographic keys (e.g. associated resources), within the communication data and store the cryptographic key and the related information into a database. In some examples, the remote server processor may further identify (e.g. extract) diagnostic and/or telemetry data within the communication data and store this information into another database. In some examples, the remote server processor may cause the cryptographic key and the related information to be stored into a first memory and/or a first memory area within a memory and cause the diagnostic and/or telemetry data to be stored into a second memory and/or a second memory area within the second memory. Separate memories may increase the flexibility to apply different constraints over the stored data, such as encrypting the data including cryptographic keys and related information or applying stronger encryption algorithms than algorithms used to encrypt diagnostic and/or telemetry data.

The remote server communication interface may include a receiver for uni-directional communication, receiving data from remote devices like the SST 201. The remote server communication interface may include a transmitter to send software updates or other data to the SST 201, albeit infrequently, as updates are typically performed periodically (e.g., every few months) rather than continuously or in real-time. In some examples, the remote server 221 may receive the communication data described above using via the unidirectional communication channel.

In some examples, the system may include a plurality of SSTs, each SST including an SST as described in this disclosure. Correspondingly, the remote server 221 may receive one or more respective cryptographic keys from each SST, in which the one or more respective cryptographic keys may be used for authentication and/or authorization operations as described herein for that SST. The remote server processor may store the one or more respective cryptographic keys for each SST of multiple SSTs. Illustratively, referring to information stored at the SST side in accordance with FIG. 3, the remote server memory may include, for each SST, the respective one or more cryptographic keys sent by the respective SST, accessible resources (if available) for each key of the respective one or more cryptographic keys, and if available, validity information (e.g. a time period in which the respective key is valid).

Furthermore, the remote server memory may include a further database including information representative of authorizable users (e.g. technicians) and a mobile device identifier identifying a mobile device at the disposition of the respective authorizable user. In some examples, the further database may further include, for each authorizable user, information indicating one or more resources of an SST which the respective authorizable user may be deployed to service. For example, a first authorizable user may be deployed to service only keypad and card reader of an SST, while a second authorizable user may be deployed to service the cash media dispenser and the deposit unit of an SST. A third authorizable user may be deployed to service the software of an SST at the site. A fourth authorizable user may be deployed to service any resource of an SST.

In view of multiple SSTs providing multiple cryptographic keys and multiple authorizable users, the remote server processor may determine to provision uses for multiple cryptographic keys to multiple authorizable users through an allocation algorithm. The allocation algorithm may include allocating, to one authorizable user of multiple authorizable users, one or more provisioned cryptographic keys, such that each provisioned cryptographic key is of one SST of the multiple SSTs.

In some examples, the allocation algorithm described herein may include an allocation of open service tasks that may be stored in the remote server memory or in an external database. Illustratively, the remote server processor may determine open service tasks based on various types of information, such as diagnostic and/or telemetry data received from the multiple SSTs, previous service records for scheduled maintenance, customer complaints, information provided by operators, etc.

The open service tasks determined by the remote server processor may indicate specific resources or components within each SST of the multiple SSTs, which may require servicing, maintenance, or replacement by the authorizable users. These resources can include the various I/O devices 110 such as the keypad 111, cash dispenser 113, deposit unit 114, card reader 112, printer 116, display unit 115, and others at the respective SST. For example, based on analyzing diagnostic and/or telemetry data like cash dispenser telemetry, transaction logs, and sensor readings received from a particular SST, the remote server processor may determine that the cash canisters in the cash dispenser 113 of that SST need to be replenished. Correspondingly, the remote server processor may generate an open service task indicating a "cash replenishment" service is required for the cash dispenser 113 at that specific SST location. Similarly, by monitoring printer consumable levels, paper jam incidents, or print quality issues reported by an SST, the remote server 221 may create an open service task for a technician to perform preventive maintenance or repair on the printer unit 116 of that terminal.

In some cases, the open service tasks may be generated proactively based on predictive analytics performed on the received telemetry data. For instance, if the remote server processor may detect anomalous sensor readings or error patterns that could potentially lead to a future failure in a card reader 112, it can preemptively schedule an open service task for preventive maintenance of that card reader before an actual failure occurs.

The open service tasks generated by the remote server 221 can cover a wide range of service requirements, including hardware repairs, software updates, security patch installations, consumable replacements, routine cleaning and maintenance activities, and more. Each task may be associated with a specific SST 201 of the multiple SSTs and the resource (e.g., I/O device 110) of the SST, which needs attention. These open service tasks can be stored in a database or a task queue within the remote server memory or an external storage system accessible to the remote server 221. The tasks can be prioritized based on factors such as severity, potential impact on operations, and service level agreements (SLAs) with customers or service providers. The remote server processor may then allocate these open service tasks to available authorizable users (maintenance operators such as technicians or service personnel) based on factors such as their resource privilege, skill levels, geographic proximity to the affected SST locations, and current workloads. Correspondingly, for each open service task for an SST, the remote server processor may also determine the respective cryptographic key received from that SST based on the resources needing the attention, and provision the respective cryptographic key to the respective authorizable user to which the service task of that SST is allocated.

By continuously monitoring the operational data from multiple SSTs 201 and generating open service tasks based on this data, the remote server 221 may enable proactive and efficient maintenance of the SST network. This approach may help minimize downtime, extend the lifespan of critical components, and ensure a consistent and reliable service experience for customers using the SSTs. In this constellation, each open service task may be associated with information representing an identifier of an authorizable user assigned for the service task, an identifier for the SST requiring the service, resources for the SST requiring the service, and a provisioned cryptographic key of one or more received cryptographic keys received from the SST.

The remote server processor may, for each open service task, send information related to the open service task to the respective authorizable user allocated to the open service task. Illustratively, the information related to the open service task may include a definition of the open service task (e.g. service to be performed by the authorizable user), an identifier of the SST (e.g. a unique identifier, a location, etc.). In accordance with various aspects described herein, the remote server processor may encode information representing the provisioned cryptographic key for the open service task to the mobile device of the authorizable user.

FIG. 4 shows an illustrative example including multiple SSTs in accordance with various aspects provided herein. As described above, in case of multiple SSTs 201a-c, each SST sends its respective one or more cryptographic keys to the remote server 221. In this illustrative example, the first SST 201a sends first three cryptographic keys (KEY#1a; KEY#2a; KEY#3a) generated for different one or more resources from each other. The second SST 201b sends second three cryptographic keys (KEY#1b; KEY#2b; KEY#3b) generated for different one or more resources from each other. The third SST 201 sends third three cryptographic keys (KEY#1c; KEY#2c; KEY#3c) generated for different one or more resources from each other.

The remote server processor may determine a first open service task for the first SST 201a considering resources of the first SST 201a requiring the attention, and allocate the first open service task to a first authorizable user to whom a first mobile device 222a is dispositioned. Based on the first open service task, the remote server processor may provision one of the cryptographic keys sent by the first SST 201a that matches to the resources requiring the attention (e.g. KEY#1a) within the first open service task and send that key to the first mobile device 222a. The remote server processor 221 may determine a second open service task for the second SST 201b considering resources of the second SST 201b requiring the attention, and allocate the second open service task to the first authorizable user as well. Based on the second open service task, the remote server processor may provision one of the cryptographic keys sent by the second SST 201b that matches to the resources requiring the attention (e.g. KEY#2b) within the second open service task and send that key to the first mobile device 222a. The remote server processor 221 may determine a third open service task for the third SST 201c considering resources of the third SST 201c requiring the attention, and allocate the third open service task to a second authorizable to whom a second mobile device 222b is dispositioned. Based on the third open service task, the remote server processor may provision one of the cryptographic keys sent by the third SST 201c that matches to the resources requiring the attention (e.g. KEY#3c) within the third open service task and send that key to the second mobile device 222b.

Referring back to FIG. 2, the mobile device 222 may receive the provisioned cryptographic key from the remote server 221. The provisioned cryptographic key may correspond to one of the cryptographic keys sent by the SST 201 as described herein. The mobile device 222 may store the provisioned cryptographic key into the mobile device memory.

The processor 101 may generate a cryptographic challenge. Illustratively, the processor 101 generates a cryptographic challenge to initiate a secure transaction or authentication process. The cryptographic challenge may serve as a means to verify the user's possession of the cryptographic key sent by the SST 201 or a device capable of deriving the expected response. In some examples, the cryptographic challenge may take various forms, such as: a random nonce or a one-time code, and/or a puzzle or a mathematical problem; and/or a sequence of bytes or a hash value.

The processor 101 may then cause the generated cryptographic challenge to be outputted to the user 223 via one or more of the I/O devices 110 that may serve as the user interface. For example, the challenge may be displayed as text or a QR code on the display unit 115, or printed on a slip by the printer unit 116. Alternatively, the cryptographic challenge may be encoded as an audio signal and played through speakers or transmitted via a short-range wireless interface like NFC or Bluetooth.

The processor 101 may generate the cryptographic challenge and/or output the cryptographic challenge in view of an event associated with the presence of the authorizable user 223 carrying the mobile device 222. The event may include a predetermined instance or period of time scheduled for maintenance. In some examples, the authorizable user 223 may interact with the user interface of the SST 201 to indicate their presence. In some examples, the SST 201 may detect the presence of the authorizable user 223 via an identification system, which may involve the card reader 112, biometric sensors disposed on the SST 201, and the like. In some examples, the authorizable user 223 may indicate its presence through the mobile device 222. The SST 201 may detect the presence of an authorized mobile device through any known means, by which the SST 201 may associate the presence of the authorized mobile device with the presence of the authorizable user 223. In some examples, the authorizable user 223 may carry a device including a security token (e.g. CrypT A) and/or the mobile device 222 may be the device including the security token. Through an established connection (e.g. a wired connection or a wireless connection), the processor 101 may identify the security token disposition to the authorizable user 223, which may trigger the processor 101 to generate the cryptographic challenge and/or output the cryptographic challenge.

Through the output cryptographic challenge, the authorizable user 223 may be prompted to provide a valid response to the output cryptographic challenge. The authorizable user 223 may provide a response either by entering it through the keypad 111, touch screen, or other input devices of the I/O device 110, or by presenting a physical token or device capable of generating the expected response. In the case of a hardware token included in the mobile device 222, the token may have a built-in keypad or biometric sensor for the user to input the challenge, and the mobile device may use the provisioned cryptographic key stored within the mobile device memory to compute the response.

The processor 101 may receive information representing the user's response to the cryptographic challenge. Illustratively, the user's response to the cryptographic challenge may be received by the SST 201 through designated I/O devices 110 designated as the user interface. For instance, if the authorizable user 223 enters the response via the keypad 111, the encrypted pin pad (EPP) may securely capture and transmit the entered response to the processor 101. If the response is provided through a hardware token, the SST 201 may receive the response via a wired interface like USB or wirelessly through NFC, Bluetooth, or other short-range communication protocols supported by the communication interface 103.

Upon receiving the user's response, the processor 101 may verify its validity and authorize the authorizable user 223 to access resources of the SST 201. As described herein, through the verification of the response being valid, the processor 101 may authorize the access of one resource of the SST 201, designated resources of the SST 201 associated with the keys used to verify the response to the cryptographic challenge, or all resources of the SST 201.

In the scenario, in which the cryptographic key shared between the SST 201 and the remote server 221 is a symmetric key, the processor 101 may generate the cryptographic challenge based on that shared symmetric key. For example, the processor 101 may generate the cryptographic challenge by generating, for example, a random nonce or one-time code and encrypt it using a symmetric encryption algorithm like AES or 3DES with the shared symmetric key stored in the memory 102. The processor 101 may accordingly output the encrypted cryptographic challenge (e.g. encrypted nonce or code) output as the cryptographic challenge to the user via the I/O devices 110, such as displaying it on the display unit 115 or printing it on a slip from the printer 116. The authorizable user 223, who also possesses the shared symmetric key within the mobile device 222, may then decrypt the challenge using the same symmetric key (i.e. provisioned cryptographic key stored in the mobile device 222) and algorithm to recover the original nonce or code (i.e. the generated challenge, (i.e. plaintext information)). For this purpose, the authorizable user 223 may provide information provided by the user interface of the SST 201 into the mobile device 222 (e.g. scans the QR code, scans the printer slip, enter provided characters through keys of the mobile device, etc.) and the mobile device generates a response based on the provisioned cryptographic key and the provided information representing the challenge output by the user interface. The authorizable user 223 may enter a corresponding response, which may be the decrypted nonce or code (i.e. the generated challenge), into the SST 201 through designated I/O devices 110 like the keypad 111 or touch screen display. The processor 101 may correspondingly authenticate the authorizable user 223 based on a successful verification of the response. The processor 101 may receive this response and compare the received response (e.g. representing the generated challenge) to the original nonce or code (i.e. the challenge) that the processor 101 has generated. If the response matches, the authorizable user may be considered as authenticated, as they have demonstrated possession of the shared symmetric key.

In the scenario, in which the cryptographic key shared between the SST 201 and the remote server 221 is the public key of a public-private key pair generated at the SST 201, the processor 101 may leverage asymmetric cryptography for the challenge-response protocol. In this case, the processor 101 may generate the cryptographic challenge by, for example, generating a random value or a message as the challenge. The processor 101 may digitally sign the cryptographic challenge using the private key counterpart stored in the memory 102 and a digital signature algorithm like RSA or ECDSA. This signed challenge may be output to the user via the I/O devices as the output cryptographic challenge. The authorizable user 223, who may possess the corresponding public key (e.g., obtained as the provisioned cryptographic key and stored in the mobile device 222), can verify the digital signature on the challenge using that public key. For this purpose, the authorizable user 223 may provide information provided by the user interface of the SST 201 into the mobile device 222 (e.g. scans the QR code, scans the printer slip, enter provided characters through keys of the mobile device, etc.) and the mobile device generates a response based on the provisioned cryptographic key and the provided information representing the challenge output by the user interface. If the signature is valid, the authorizable user 223 (i.e. the mobile device 222) can derive the expected response by applying a predefined transformation or hash function to the original challenge. The authorizable user may enter this derived response into the SST 201 through the I/O devices 110. The processor 101 may correspondingly authenticate the authorizable user 223 based on a successful verification of the response. The processor 101 may receive the response and compares it to the expected value based on the original challenge. If they match, the authorizable user may be authenticated, as they have demonstrated possession of the public key corresponding to the SST's private key used for signing.

In the scenario, in which the cryptographic key shared between the SST 201 and the remote server 221 is the private key of a public-private key pair, the challenge-response protocol may be considered to operate in a reverse manner compared to the public key scenario and similar to symmetric key scenario. The processor 101 may generate the challenge by generating a random value or message to serve as the cryptographic challenge. The processor 101 may then encrypt the generated challenge using the public key stored in the memory 102 and a digital signature algorithm like RSA or ECDSA. The processor 101 may accordingly output the encrypted cryptographic challenge output as the cryptographic challenge to the user via the I/O devices 110, such as displaying it on the display unit 115 or printing it on a slip from the printer 116. The authorizable user 223, who also possesses the private key of the public-private key pair within the mobile device 222, may then decrypt the challenge using the private key (i.e. provisioned cryptographic key stored in the mobile device 222) and algorithm to recover the information representing the generated challenge (i.e. plaintext information). For this purpose, the authorizable user 223 may provide information provided by the user interface of the SST 201 into the mobile device 222 (e.g. scans the QR code, scans the printer slip, enter provided characters through keys of the mobile device, etc.) and the mobile device generates a response based on the provisioned cryptographic key and the provided information representing the challenge output by the user interface. The authorizable user 223 may enter a corresponding response, which may be the decrypted challenge (i.e. the generated challenge), into the SST 201 through designated I/O devices 110 like the keypad 111 or touch screen display. The processor 101 may correspondingly authenticate the authorizable user 223 based on a successful verification of the response. The processor 101 may receive this response and compare the received response (e.g. representing the generated challenge) to the original challenge that the processor 101 has generated. If the response matches, the authorizable user may be considered as authenticated, as they have demonstrated possession of the shared private key.

Alternatively, the processor 101 may generate the challenge by generating a message, a puzzle, or a mathematical problem associated with an expected value to serve as the cryptographic challenge but output the generated challenge including the generated message, puzzle, or mathematical problem without encryption. The authorizable user 223, who also possesses the private key of the public-private key pair within the mobile device 222, may determine a response and encrypt the response using the private key to obtain an encrypted response. For this purpose, the authorizable user 223 may provide information provided by the user interface of the SST 201 into the mobile device 222 (e.g. scans the QR code, scans the printer slip, enter provided characters through keys of the mobile device, etc.) and the mobile device generates a response based on the provisioned cryptographic key and the provided information representing the challenge output by the user interface. The authorizable user 223, may then enter the encrypted response into the SST 201 through designated I/O devices 110. The processor 101 may correspondingly authenticate the authorizable user 223 based on a successful verification of the response. The processor 101 may receive the encrypted response, decrypt the encrypted response using the public key stored in the memory 102 to obtain a decrypted response and compare the decrypted response to the expected value. If the decrypted response matches, the authorizable user may be considered as authenticated, as they have demonstrated possession of the shared private key.

In the case of generation of multiple cryptographic keys at the SST 201 for providing access to different resources, noting that the SST 201 may store the processor 10 may perform above-mentioned operations for each stored key (e.g. the keys 302) corresponding to the generated multiple cryptographic keys to verify the response.

Illustratively, in the cases in which the output cryptographic challenge by the SST 201 being an encrypted output challenge, the SST 201 may encrypt multiple generated challenges with the multiple cryptographic keys and output multiple cryptographic challenges, each being a respective cryptographic challenge encrypted using a respective key of the multiple stored keys. The mobile device 222 generating the response may apply the provisioned cryptographic key to each of the multiple output cryptographic challenges and generate the response only for the decryption among them outputting plaintext (i.e. the response accordingly includes the plaintext). Once the authorizable user 223 inputs the response via the user interface to the SST 201, the processor 101 may determine corresponding authorized resources based on the response indicating only one of the generated challenges and authorize the resources (e.g. the accessible resources 304) corresponding to the stored key (the keys 302) with which the generated challenge had been generated.

Illustratively, in the cases in which the output cryptographic challenge by the SST 201 being a non-encrypted output challenge, the SST 201 may output the generated challenge. The mobile device 222 generating the response may apply the provisioned cryptographic key to the output cryptographic challenge and generate the response by encrypting the response with the provisioned cryptographic key. Once the authorizable user 223 inputs the response via the user interface to the SST 201, the processor 101 may decrypt the received response using each stored key (e.g. the keys 302) of multiple stored keys and obtain a corresponding value. The processor 101 may determine which of the corresponding values matches the expected value of the generated challenge. Correspondingly, the processor 101 may verify the corresponding resource by determining the corresponding value matching the expected value and authorize access to the corresponding resources (e.g. accessible resources 304) indicated by the corresponding stored key used to obtain the corresponding value.

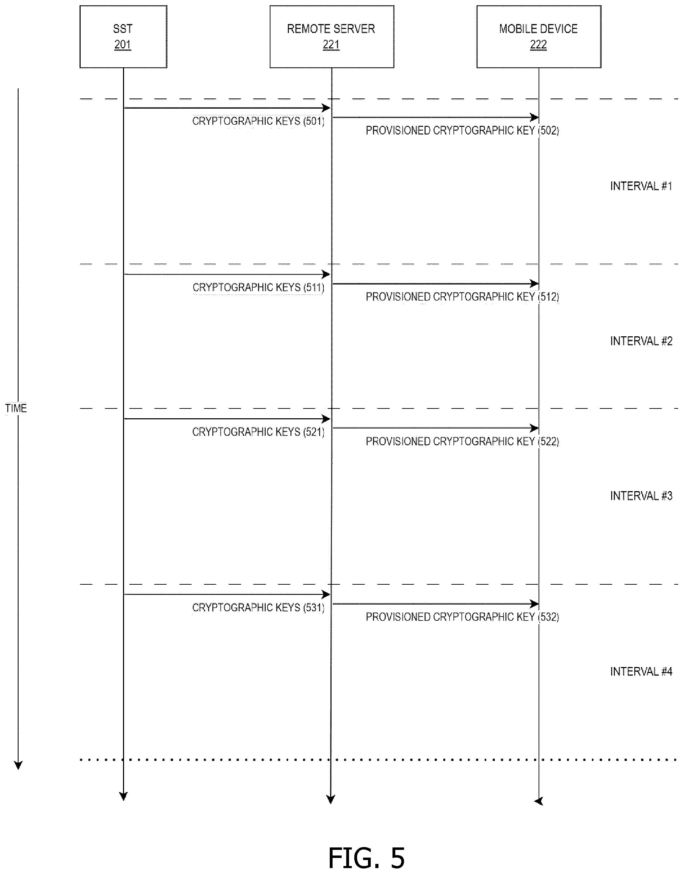

FIG. 5 shows an illustrative example of a procedure associated with generating and sending cryptographic keys to the remote server 221. In accordance with various aspects described herein, the SST 201 may generate and send the cryptographic key to the remote server 221 for a designated interval (i.e. a period of time). Illustratively, the processor 101 may, for a first interval, generate and send 501 one or more first cryptographic keys, which are valid for an authentication of the authorizable user 223 within the first interval. The remote server 221 may accordingly provision one of the one or more first cryptographic keys 201 to the authorizable user 223 and send 512 the provisioned first cryptographic key to the mobile device 222 of the authorizable user 223 in a manner such that the provisioned first cryptographic key is expected to be used within the first interval. The authorizable user 223 may authenticate themselves using the provisioned first cryptographic key only within the first interval.

Similarly, the processor 101 may, for a second interval, generate (i.e. regenerate) and send 511 one or more second cryptographic keys, which are valid for an authentication of the authorizable user 223 within the second interval. The remote server 221 may accordingly provision one of the one or more second cryptographic keys 201 to the authorizable user 223 and send 512 the provisioned second cryptographic key to the mobile device 222 of the authorizable user 223. The authorizable user 223 may authenticate themselves using the provisioned second cryptographic key only within the second interval. Again, the processor 101 may, for a third interval, generate (i.e. regenerate) and send 521 one or more third cryptographic keys, which are valid for an authentication of the authorizable user 223 within the third interval. The remote server 221 may accordingly provision one of the one or more third cryptographic keys 201 to the authorizable user 223 and send 522 the provisioned third cryptographic key to the mobile device 222 of the authorizable user 223. The authorizable user 223 may authenticate themselves using the provisioned third cryptographic key only within the third interval. The procedure is also similar for a fourth interval, with respect to cryptographic keys sent 531 by the SST 201, and provisioned cryptographic key 532 among the cryptographic keys to the mobile device 222.

In some examples, the aspects described herein with respect to FIG. 5 may occur at predetermined intervals and/or periodically. Illustratively, each interval may be a period of one hour, two hours, one day, two days, three days, one week, etc. In accordance with various aspects described herein, each interval may actually align with the instance which the SST 201 is configured (e.g. preconfigured) to send diagnostic and/or telemetry data to the remote server 221. In this illustrative example, the SST 201 may further send diagnostic and/or telemetry data to the remote server together with each transmission of the cryptographic keys (501, 511, 521, 531) illustrated herein.

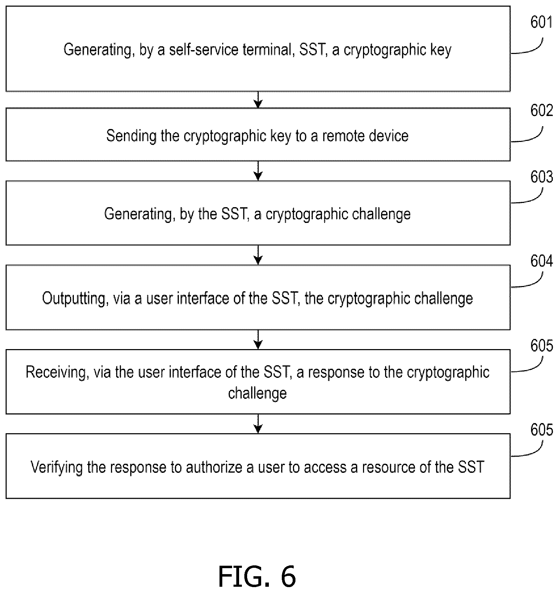

FIG. 6 shows an example of a method. The method may include generating 601, by a self-service terminal, SST, a cryptographic key; sending 602 the cryptographic key to a remote device; generating 603, by the SST, a cryptographic challenge; outputting 604, via a user interface of the SST, the cryptographic challenge; receiving 605, via the user interface of the SST, a response to the cryptographic challenge; and verifying 606 the response to authorize a user to access a resource of the SST. The method may further include any one of aspects described in this disclosure. A non-transitory computer-readable medium may include one or more instructions which, if executed by a processor, cause the processor to perform the method.

In the following, various examples are provided with reference to the aspects described above.

In example 1, the subject matter includes a method including: generating, by a self-service terminal, SST, a cryptographic key; sending the cryptographic key to a remote device; generating, by the SST, a cryptographic challenge; outputting, via a user interface of the SST, the cryptographic challenge; receiving, via the user interface of the SST, a response to the cryptographic challenge; verifying the response to authorize a user to access a resource of the SST.

In example 2, the subject matter of example 1, wherein the cryptographic key includes a symmetric cryptographic key.

In example 3, the subject matter of example 1, may further include: generating an asymmetric key pair including a public key and a private key, wherein the cryptographic key is the private key.

In example 4, the subject matter of example 3, may further include: applying a public key verification algorithm based on the public key, the cryptographic challenge, and the response to the cryptographic challenge; verifying that the response is generated using the cryptographic key based on an output of the public key verification algorithm.

In example 5, The subject matter of example 4, may further include: encrypting the cryptographic challenge with the public key to obtain an encrypted challenge; verifying the response based on the cryptographic challenge; wherein outputting the cryptographic challenge includes outputting the encrypted challenge.

In example 6, the subject matter of any one of examples 1 to 5, wherein the sending of the cryptographic key to the remote device includes sending the cryptographic key via a communication interface for transfer of diagnostic or telemetry data of the SST.

In example 7, the subject matter of example 6, may further include: determining a transmission to be performed via the communication interface for sending the diagnostic or telemetry data of the SST; encoding the diagnostic or telemetry data of the SST and the cryptographic key into a communication data; sending the communication data with the transmission.

In example 8, the subject matter of any one of examples 1 to 7, may further include: for each time interval of a plurality of time intervals: regenerating, a further cryptographic key; sending the further cryptographic key to the remote device.

In example 9, the subject matter of example 8, wherein each time interval of the plurality of time intervals is aligned with a corresponding diagnostic or telemetry data transmission of a plurality of diagnostic or telemetry data transmissions.

In example 10, the subject matter of any one of examples 1 to 9, may further include: receiving, by the remote device, the cryptographic key; provisioning a use of the cryptographic key to a selected maintenance operator among a plurality of maintenance operators based on tasks assigned to the plurality of maintenance operators; sending, by the remote device, the cryptographic key to a mobile device of the selected maintenance operator.

In example 11, the subject matter of example 10, may further include: storing, by the remote device, diagnostic or telemetry data in a first memory area; storing, by the remote device, the cryptographic key in a second memory area different from the first memory area wherein receiving the cryptographic key further includes extracting data received from the SST to obtain the diagnostic or telemetry data and the cryptographic key.

In example 12, the subject matter of any one of examples 10 to 11, may further include: receiving, by the remote device, further cryptographic keys, each further cryptographic key of the further cryptographic keys being associated with a respective further SST of a plurality of further SSTs; provisioning uses of the further cryptographic keys to the plurality of maintenance operators.

In example 13, the subject matter of any one of examples 10 to 12, wherein sending the cryptographic key to the remote device includes encrypting the cryptographic key to obtain an encrypted cryptographic key and sending the encrypted cryptographic key to the mobile device.

In example 14, the subject matter of any one of examples 10 to 13, may further include: authenticating the user based on a successful verification of the response.

In example 15, a computer-readable medium including one or more instructions which, if executed by a processor, cause the processor to perform the method of any one of examples 1 to 14.

In example 16, the subject matter includes an apparatus for a self-service terminal, the apparatus including a processor configured to: generate a cryptographic key; send the cryptographic key to a remote device; generate a cryptographic challenge; output user interface information representing the cryptographic challenge; receive a response to the cryptographic challenge; verify to authorize a user to access a resource of the SST.

In example 17, the subject matter of example 16, wherein the cryptographic key includes a symmetric cryptographic key.

In example 18, the subject matter of example 16, wherein the processor is further configured to generate an asymmetric key pair including a public key and a private key, wherein the cryptographic key is the private key.

In example 19, the subject matter of example 18, wherein the processor is further configured to: apply a public key verification algorithm based on the public key, the cryptographic challenge, and the response to the cryptographic challenge; and verify that the response is generated using the cryptographic key based on an output of the public key verification algorithm.

In example 20, the subject matter of example 18, wherein the processor is further configured to encrypt the cryptographic challenge with the public key to obtain an encrypted challenge; verify the response based on the cryptographic challenge; wherein the cryptographic challenge includes the encrypted challenge.

In example 21, the subject matter of any one of examples 16 to 20, wherein the processor is further configured to send the cryptographic key via a communication interface for transfer of diagnostic or telemetry data of the SST.

In example 22, the subject matter of example 21, wherein the processor is further configured to: determine a transmission to be performed via the communication interface for sending the diagnostic or telemetry data of the SST; encode the diagnostic or telemetry data of the SST and the cryptographic key into a communication data; and send the communication data with the transmission.

In example 23, the subject matter of any one of examples 16 to 22, wherein the processor is further configured to, for each time interval of a plurality of time intervals, regenerate, a further cryptographic key; and send the further cryptographic key to the remote device.

In example 24, the subject matter of example 23, wherein each time interval of the plurality of time intervals is aligned with a corresponding diagnostic or telemetry data transmission of a plurality of diagnostic or telemetry data transmissions.

In example 25, the subject matter includes a system including: the apparatus of any one of examples 16 to 24; and the remote device including a remote device processor; wherein the remote device processor is configured to receive the cryptographic key; provision a use of the cryptographic key to a selected maintenance operator among a plurality of maintenance operators based on tasks assigned to the plurality of maintenance operators; and send the cryptographic key to a mobile device of the selected maintenance operator.

In example 26, the subject matter of example 25, wherein the remote device processor is further configured to store diagnostic or telemetry data in a first memory area; store the cryptographic key in a second memory area different from the first memory area; and extract data received from the SST to obtain the diagnostic or telemetry data and the cryptographic key.

In example 27, the subject matter of any one of examples 25 to 26, wherein the remote device processor is further configured to receive further cryptographic keys, each further cryptographic key of the further cryptographic keys being associated with a respective further SST of a plurality of further SSTs; and provision uses of the further cryptographic keys to the plurality of maintenance operators.

In example 28, the subject matter of any one of examples 25 to 27, wherein the remote device processor is further configured to decrypt the received cryptographic key.

In example 29, the subject matter of any one of examples 25 to 27, wherein the processor is further configured to authenticate the user based on a successful verification of the response.

While the disclosure has been particularly shown and described with reference to specific aspects, it should be understood by those skilled in the art that various changes in form and detail may be made therein without departing from the spirit and scope of the disclosure as defined by the appended claims. The scope of the disclosure is thus indicated by the appended claims and all changes, which come within the meaning and range of equivalency of the claims, are therefore intended to be embraced.

## Claims

1. A method comprising:
generating, by a self-service terminal, SST, a cryptographic key;
sending the cryptographic key to a remote device;
generating, by the SST, a cryptographic challenge;
outputting, via a user interface of the SST, the cryptographic challenge;
receiving, via the user interface of the SST, a response to the cryptographic challenge;
verifying the response to authorize a user to access a resource of the SST.

2. The method of claim 1,
wherein the cryptographic key comprises a symmetric cryptographic key.

3. The method of claim 1, further comprising:
generating an asymmetric key pair comprising a public key and a private key, wherein the cryptographic key is the private key.

4. The method of claim 3, further comprising:
applying a public key verification algorithm based on the public key, the cryptographic challenge, and the response to the cryptographic challenge;
verifying that the response is generated using the cryptographic key based on an output of the public key verification algorithm.

5. The method of claim 4, further comprising:
encrypting the cryptographic challenge with the public key to obtain an encrypted challenge;
verifying the response based on the cryptographic challenge;
wherein outputting the cryptographic challenge comprises outputting the encrypted challenge.

6. The method of any one of claims 1 to 5,
wherein the sending of the cryptographic key to the remote device comprises sending the cryptographic key via a communication interface for transfer of diagnostic or telemetry data of the SST.

7. The method of claim 6, further comprising:
determining a transmission to be performed via the communication interface for sending the diagnostic or telemetry data of the SST;
encoding the diagnostic or telemetry data of the SST and the cryptographic key into a communication data;
sending the communication data with the transmission.

8. The method of any one of claims 1 to 7, further comprising:
for each time interval of a plurality of time intervals:
regenerating, a further cryptographic key;
sending the further cryptographic key to the remote device.

9. The method of claim 8,
wherein each time interval of the plurality of time intervals is aligned with a corresponding diagnostic or telemetry data transmission of a plurality of diagnostic or telemetry data transmissions.

10. The method of any one of claims 1 to 9, further comprising:
receiving, by the remote device, the cryptographic key;
provisioning a use of the cryptographic key to a selected maintenance operator among a plurality of maintenance operators based on tasks assigned to the plurality of maintenance operators;
sending, by the remote device, the cryptographic key to a mobile device of the selected maintenance operator.

11. The method of claim 10, further comprising:
storing, by the remote device, diagnostic or telemetry data in a first memory area;
storing, by the remote device, the cryptographic key in a second memory area different from the first memory area
wherein receiving the cryptographic key further comprises extracting data received from the SST to obtain the diagnostic or telemetry data and the cryptographic key.

12. The method of any one of claims 10 to 11, further comprising:
receiving, by the remote device, further cryptographic keys, each further cryptographic key of the further cryptographic keys being associated with a respective further SST of a plurality of further SSTs;
provisioning uses of the further cryptographic keys to the plurality of maintenance operators.

13. The method of any one of claims 10 to 12, further comprising:
authenticating the user based on a successful verification of the response.

14. A computer-readable medium comprising one or more instructions which, if executed by a processor, cause the processor to perform the method of any one of claims 1 to 13.

15. An apparatus for a self-service terminal, the apparatus comprising a processor configured to:
generate a cryptographic key;
send the cryptographic key to a remote device;
generate a cryptographic challenge;
output user interface information representing the cryptographic challenge;
receive a response to the cryptographic challenge;
verify the response to authorize a user to access a resource of the SST.
